# EUROPEAN PATENT SPECIFICATION

(11) **EP 0 372 401 B1**
(45) Date of publication and mention of the grant of the patent: **22.02.1995**
(21) Application number: 89122135.0
(22) Date of filing: 30.11.1989
(51) Int. Cl.: G03G 15/00, B65H 85/00, G03B 27/62

(54) **Reserving type original feeding apparatus**
Vorlagenzuführgerät mit zeitweiliger Lagerung von Vorlagen
Appareil d'alimentation en originaux avec stockage temporaire des originaux

(30) Priority: 02.12.1988 JP 306250/88; 23.06.1989 JP 162082/89; 23.06.1989 JP 162083/89
(43) Date of publication of application: 13.06.1990
(73) Proprietor: CANON KABUSHIKI KAISHA, Tokyo (JP)
(72) Inventor: Kitahara, Makoto, Ohta-ku Tokyo (JP); Takahashi, Yuji, Setagaya-ku Tokyo (JP); Ueda, Noriyoshi, Yokohama-shi Kanagawa-ken (JP)
(74) Representative: Tiedtke, Harro, Dipl.-Ing.

(56) References cited:
- EP-A- 0 254 317
- WO-A-88/04798
- DE-A- 3 545 915
- DE-A- 3 631 129
- DE-A- 3 631 129
- DE-A- 3 709 639
- PATENT ABSTRACTS OF JAPAN, vol. 8, no. 1 (P-246)[1438], 6th January 1984;& JP-A-58 166 361
- PATENT ABSTRACTS OF JAPAN, vol. 10, no. 7 (P-419)[2064], 11th January 1986;& JP-A-60 163 052
- XEROX DISCLOSURE JOURNAL, vol. 11, no. 2, March/April 1986, page 89; W.A.HENRY, II: "Automatically set side guides for document feeder"

## Description

### BACKGROUND OF THE INVENTION

### Field of the Invention

The present invention relates to an original feeding apparatus incorporated into an image forming system such as a copying machine, and more particularly it relates to an original feeding apparatus wherein an original set in a predetermined position is fed to a predetermined processing station and then is ejected out of the image forming system.

### Related Background Art

In a conventional original feeding apparatus used with a copying machine and the like, until an operator has finished the treatment processes of his originals by using the original feeding apparatus, any other operators could not use the same original feeding apparatus. In fact, it is a practice that a number of persons must form in a line to await for his turn for using the original feeding apparatus. However, it is apparent that such circumstances are very inefficient and time- consuming.

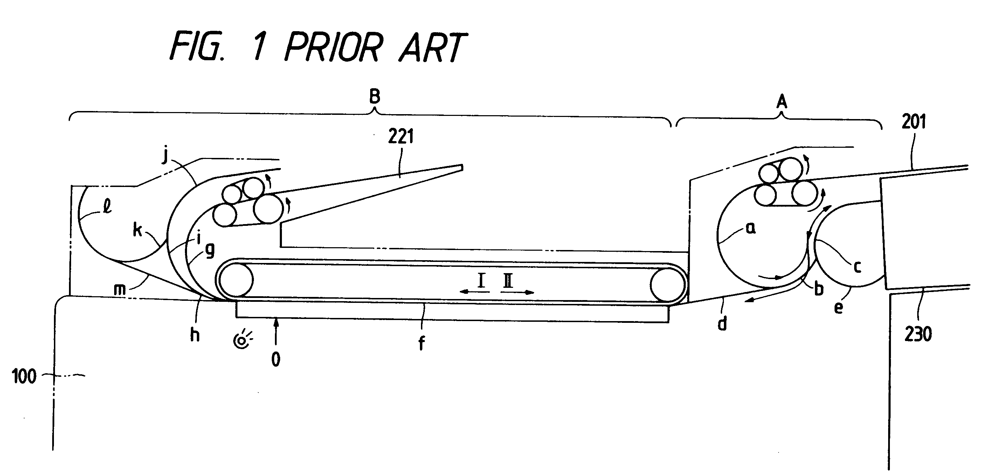

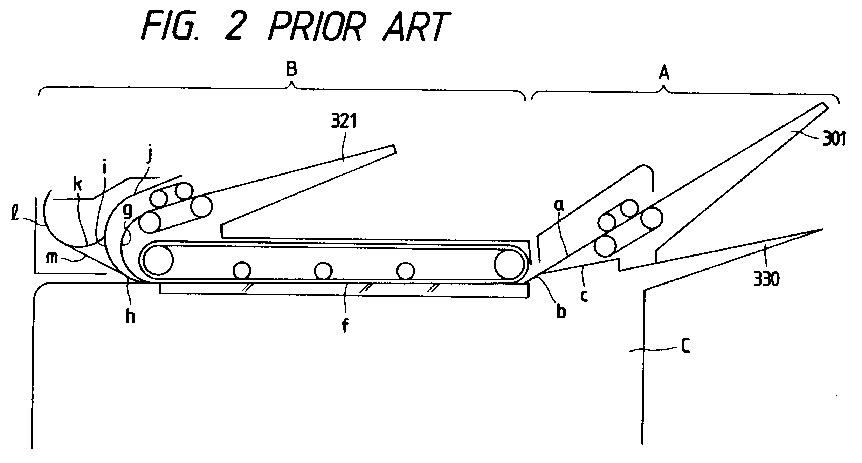

In view of the above, original feeding apparatuses wherein one or more "original groups" (each of which means a group of originals that are to be treated in the same copying condition) are previously set on an original support and the original groups are automatically and successively treated in accordance with the respective treating conditions requested for the respective original groups have been proposed. Such an apparatus is called a "reserving type original feeding apparatus" and is constituted as shown in Figs. 1 and 2. The construction shown in Fig. 1 is fully described in the Japanese Patent Laid-Open No. 62-65842 (corresponding to US-A-5 156 386) and the construction shown in Fig. 2 is fully described in the Japanese Patent Laid-Open No. 62-222939 (corresponding to the U.S. Patent 4,819,023 patented on April 4, 1989).

In the original feeding apparatus shown in Fig. 1, a group of originals set on a tray 201 in an A portion (reserving portion) with the surface to be copied faced upside are separated one by one from the bottom and the separated original is passed through paths (a), (b), (c), (d), (f). (i) and (j) and is fed to a tray 221 in a B portion (circulating portion). In the B portion, predetermined original reading processes are repeated by predetermined times through an original circulating movement (221 → g→ f → h → i → j → 221 - g → f → h → i → j → 221 .....), and, after the processes have been completed, the original is moved from the tray 221 in the B portion through the paths (g), (f), (d), (b), (c) and (e) to an ejector tray 230 and is ejected thereon with the above-mentioned surface faced upside.

When the above-mentioned treatment regarding one original group has been completed, the similar treatment regarding the next original group situated on the tray 201 in the A portion is performed in the same manner. In this way, it is possible to continuously treat a plurality of original groups.

In the original feeding apparatus shown in Fig. 2, a group of originals set on a tray 301 in an A portion with the surface to be copied faced upside are separated one by one from the bottom and the separated original is passed through paths (a), (b), (f), (h), (i), 0), (k), (I), (m), (h), (f), (h), (i) and (j) and is fed to a tray 321 in a B portion. In the B portion, predetermined original reading processes are repeated by predetermined times through an original circulating movement, and, after the processes have been completed, the original is moved from the tray 321 in the B portion through the paths (g), (f), (h), (i), (j), (k), (I), (m), (h), (f), (b) and (c) to an ejector tray 330 and is ejected thereon with the above-mentioned surface faced upside. When the above-mentioned treatment regarding one original group has been completed, as similar to Fig. 1, the similar treatment regarding the nextorig- inal group situated on the tray 301 in the A portion is performed in the same manner. In this way, it is possible to continuously treat a plurality of original groups.

However, in the above-mentioned conventional original feeding apparatuses shown in both Fig. 1 and Fig. 2, since they each include two trays one of which is the supply tray 201 or 301 in the A portion and the other of which is the ejector tray 230 or 330, the protruded portions projecting from the apparatus are increased, thus making the apparatus large-sized. Further, since the ejector tray 230, 330 is disposed below the supply tray 201, 301, it was difficult to pick up or remove the ejected originals and to confirm the ejected original and/or the ejecting operation.

Further, in the example of Fig. 1, since the paths in the A portion are complicated, if the original is jammed, the jam recovery treatment will be difficult. In addition, since the switch-back operation must be performed in the paths (b), (c) and (e) when the original is fed back from the B portion to the A portion, it takes a long time for feeding back the original from the tray 221 of the B portion.

On the other hand, in the example of Fig. 2, it is necessary that the originals must be turned over not to disorder the originals when they are fed back from the B portion to the A portion through the paths (h), (i), (j), (k), (I), (m) and (h). Consequently, it took a long time for feeding back the original.

Further, in the above-mentioned conventional original feeding apparatuses shown in both Fig. 1 and Fig. 2, as to a plurality of original groups, it is so designed that the original is fed from the supply tray 201 or 301 of the A portion to the tray 221 or 321 of the B portion and, after the original has been processed in the B portion, it is fed back to the ejector tray 230 or 330 of the A portion; as to the single original group, it is so designed that the original group is directly set in the tray 221 or 321 of the B portion and, after the original has been processed in the B portion, it is fed back to the tray 221 or 321 of the B portion. Accordingly, the construction regarding the plurality of original groups is independent from that regarding the single original group, and, therefore, the relation between the A portion and the B portion was not fully considered.

For example, the case where the originals are set on the tray 201 or 301 of the A portion during the treatment of one original group in the B portion was not considered. Further, in view of various combinations, there arose inconvenience in the feeding of the original from the A portion to the B portion and/or in the feeding of the original from the B portion to the ejector tray 230 or 330.

Furthermore, in the above-mentioned conventional apparatuses shown in both Fig. 1 and Fig. 2, if the sizes of the originals are different from each other, there will arise a problem that the original cannot be fed advantageously when the originals are fed from the reserving original supply portion (A portion) to the original circulating portion (B portion). That is to say, when all of the originals have the same size and lateral regulating guides in the A and B portions are adjusted to have a width corresponding to the size of the original, the originals are fed from the A portion to the B portion without trouble; but, if, during the treatment of the original in the B portion, the originals having different size are set in the A portion, a problem will occur.

For example, it is assumed that the original group including the originals having B5 size is processed in the B portion.

The tray 221 or 321 of the B portion has lateral regulating guides for preventing the original from shifting in a direction perpendicular to an original feeding direction. Now, it is assumed that the originals having A4 size are set in the tray 201 or 301 of the A portion. In this case, when the original (A4 size) in the A portion is fed to the B portion after the treated original group in the B portion has been ejected onto the ejector tray, since the movement of the original is obstructed by the lateral regulating guides (set to have the B5 size width), the original will be jammed.

To the contrary, if the originals having A4 size are set in the B portion and the originals having B5 size are set in the A portion, the width between the lateral regulating guides in the B portion will be wider than the width of the original fed from the A portion, with the result that there arises a problem that the lateral regulating guides could not prevent the lateral movement of the original.

### SUMMARY OF THE INVENTION

It is the main object of the present invention to provide a compact reserving type original feeding apparatus without losing the function of a conventional original circulating means.

Afurther object of the present invention is to eliminate the above-mentioned drawbacks in conventional reserving type original feeding apparatuses having a plurality of independent original feeding means. Further, mainly in consideration of the operability and reliability of the apparatus, another further object of the present invention is to provide a reserving type original feeding apparatus which can smoothly perform the feeding of an original group from an original reserving portion to an original circulating portion and the selection of ejector trays for receiving the original ejected from the original circulating portion.

Further, similarly, in consideration of the operability and reliability of the apparatus, a still further object of the present invention is to provide a reserving type original feeding apparatus which can prevent the jamming of originals even if the size of originals set in an original reserving portion is different from the size of originals set in an original circulating portion. The main object is achieved with a reserving type original feeding apparatus having the features as claimed in claim 1. In other words, there is provided a reserving type original feeding apparatus wherein original feeding paths can be shorter and a waiting time between one treatment and a next treatment is reduced to improve the productivity, by smoothly performing the feeding of the original group from an original reserving portion to an original circulating portion.

In order to achieve the above-mentioned objects, by providing a common original ejector tray above an original processing portion, it is possible to obtain a reserving type original feeding apparatus wherein the ejector tray is not protruded from the apparatus, the ejected original can be easily confirmed and the original can be fed from the original circulating portion to the ejector tray for a short time.

Further, in order to achieve the above still further object, by comparing a width LA of a second regulating guide (movable guide) detected in the original reserving portion with a width LB of a first regulating guide (movable guide) detected in the original circulating portion and by permitting the feeding of the original from the original reserving portion to the original circulating portion when the width LA is equal to the width LB, the original fed to the original circulating portion can be prevented from jamming. In addition, by controlling the movement of the first regulating guide of the original circulating portion in such a manner that the width LA becomes equal to the width LB, the jamming of the original can be prevented even if the size of the original set in the original reserving portion differs from the size of the original set in the original circulating portion, thus providing the reserving type original feeding apparatus which can prevent the lateral movement of the original being fed and is reliable.

Further advantageous modifications of the invention are described in the dependent claims.

### BRIEF DESCRIPTION OF THE DRAWINGS

Figs. 1 and 2 are schematic elevational sectional views showing conventional original feeding apparatuses, respectively;
Fig. 3 is an elevational sectional view of an original feeding apparatus according to a preferred embodiment of the present invention;
Fig. 4 is an elevational sectional view of an original feeding apparatus according to another embodiment of the present invention;
Fig. 5 is an explanatory view for explaining the stacking of originals;
Fig. 6 is an elevational sectional view of an original feeding apparatus according to a further embodiment of the present invention;
Fig. 7 is an elevational sectional view of an original feeding apparatus according to a still further embodiment of the present invention;
Figs. 8A and 8B are schematic views showing trays in A and B portions, respectively;
Fig. 8C is a block diagram for controlling embodiment of Figs. 8A and 8B;
Fig. 9A is a schematic view of a mechanism for driving the trays;
Fig. 9B is a block diagram for controlling embodiment of Fig. 9A;
Figs. 10 to 12 are views showing original treating fashions and flows of the originals in Aand B portions; and
Fig. 13 is a block diagram of a controlling embodiment of Figs. 10 to 12.

### DESCRIPTION OF THE PREFERRED EMBODIMENTS

The present invention will now be explained in connection with embodiments thereof with reference to the accompanying drawings.

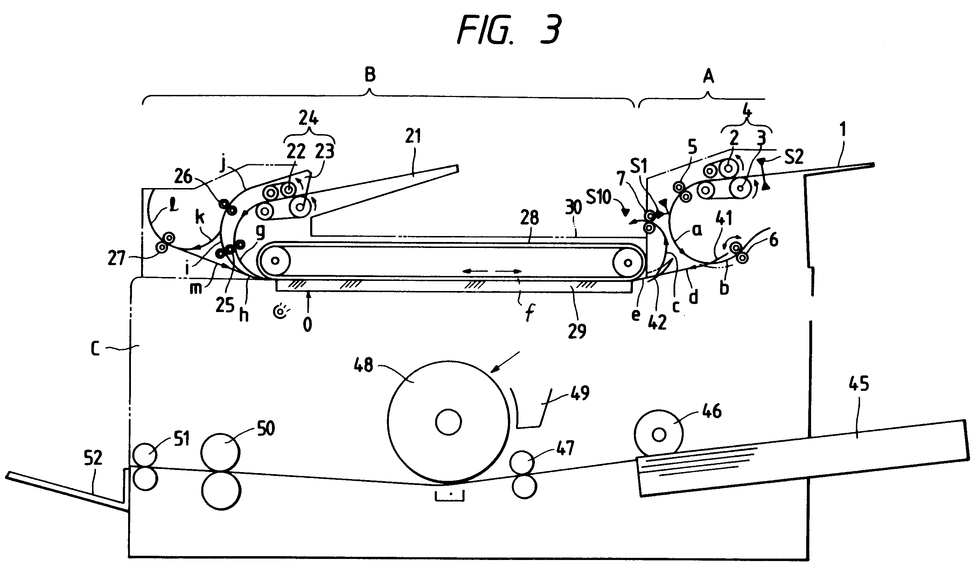

Fig. 3 shows, in an elevational section, a reserving type original feeding apparatus according to an embodiment of the present invention which includes a reserved original feeding portion A and an original circulating portion B. The apparatus is adopted to an image forming system C (Incidentally, in this case, the original circulating portion B includes an original turn-over path, but it may not include such turn-over path).

First of all, the reserved original feeding portion, i.e., original reserving portion A will be explained.

This portion includes a supply tray (second stack tray) 1 into which an original group (a group of originals) is set, and a separating belt means 2 and supply belt means 3 which are arranged downstream of the supply tray and can separate the originals one by one from the bottom of the original group by rotating in directions shown by the arrows, respectively. The separating belt means 2 and the supply belt means 3 constitute a separating/supplying portion (second separating/supplying means) 4.

Downstream of the separating/supplying portion 4, sheet paths (a), (b) (third sheet path) extend downwardly to turn over the original, and pairs of rollers 5, 6 are provided for feeding the original in the sheet paths (a), (b). Sheet paths (d), (e) (fourth sheet path) are branched from the third sheet path (a) - (b) in a switch-back direction to reach a platen 29 in a treating portion of the image forming system. Further, a sheet path (fifth sheet path) (c) is branched from the fourth sheet path (d), (e) in the switch-back direction to extend toward an ejector tray 30 in the original circulating portion B. A pair of rollers 7 is provided for feeding the original in the sheet path (c).

In the illustrated embodiment, while the sheet paths (a), (b) extend downwardly of the tray 1 to turn over the original, such sheet paths may be extended upwardly of the tray to turn over the original.

A flexible deflector plate 41 is provided at the junction between the sheet paths (a), (b) and (d), whereby the original is fed from the sheet path (a) to the sheet path (b) while pushing the deflector plate 41 down (toward a two-dot and chain position) and the original is positively switched back from the sheet path (b) to the sheet path (d) by the deflector plate 41 returned to a position shown by the solid line. Similarly, a flexible deflector plate 42 is provided at the junction between the sheet paths (d), (e) and (c).

Further, a second sensor S2 for detecting the original from the tray 1 and a first sensor S1 for detecting the original in the sheet path (a) and for reading a marking on a partition paper are also provided.

Further, in Fig. 3, the reference numeral 45 designates a cassette; 46 designates a sheet supply roller; 47 designates regist rollers; 48 designates a photosensitive drum; 49 designates a developing device; 50 designates a fixing device; 51 designates ejector rollers; and 52 designates an ejector tray.

Next, the original circulating portion B will be explained.

This portion B includes an original supply tray (first stack tray) 21 into which a group of originals is set, and a separating belt means 22 and supply belt means 23 which are arranged downstream of the supply tray and can separate the originals one by one from the bottom of the original group by rotating in directions shown by the arrows, respectively. The separating belt means 22 and the supply belt means 23 constitute a separating/supplying portion (first separating/supplying means) 24. Downstream of the separating/supplying portion 24, a sheet path (g) (first sheet path) extends downwardly of the tray 21 to turn over the original in contiguous to the platen 29 of the processing portion of the system. Awhite surface belt 28 is arranged in confronting relation to the platen 29, which belt 28 can convey the original on the platen 29.

Further, sheet paths (h), (i), (j) (second sheet path) are extended upwardly from the platen 29 to turn over the original toward the tray 21. In addition, pairs of rollers 25, 26 are provided forfeeding the original in the second sheet path (h) - (j), and sheet paths (k), (I), (m) for turning over the original and a pair of rollers 27 associated therewith are also provided. The junctions between the respective sheet paths are constituted in the same manner as those in the A portion as mentioned above, and an upper surface 30 faced to the platen 29 constitutes an ejector tray.

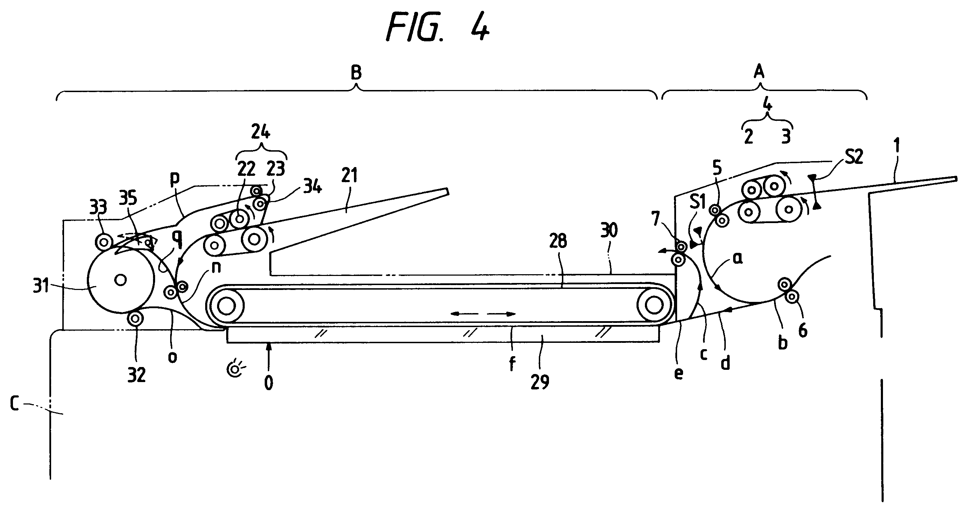

Incidentally, as shown in Fig. 4, in the original circulating portion B the sheet paths for turning over the original may form a closed loop turning over path (o → 31 → q), in place of the two switch-back configurations as shown in Fig. 3.

In Fig. 4, a first sheet path (n) is arranged to direct the original separated by the separating/supplying portion 24 to the platen 29 of the processing portion of the image forming system C. Further, sheet paths (o), (p) (second sheet path) are extended upwardly from the platen 29 to turn over the original along a periphery of a large roller 31 toward the tray 21. Further, in order to feed or move the original in the respective sheet paths, rollers 32, 33 are arranged on the large roller 31 and ejector rollers 34 are also arranged. In addition, the sheet path (q) for turning over the original is branched from the sheet path (o) to be in contiguous to the platen 29. A deflector plate is provided at the junction between the sheet paths (p) and (q) to change over the sheet paths.

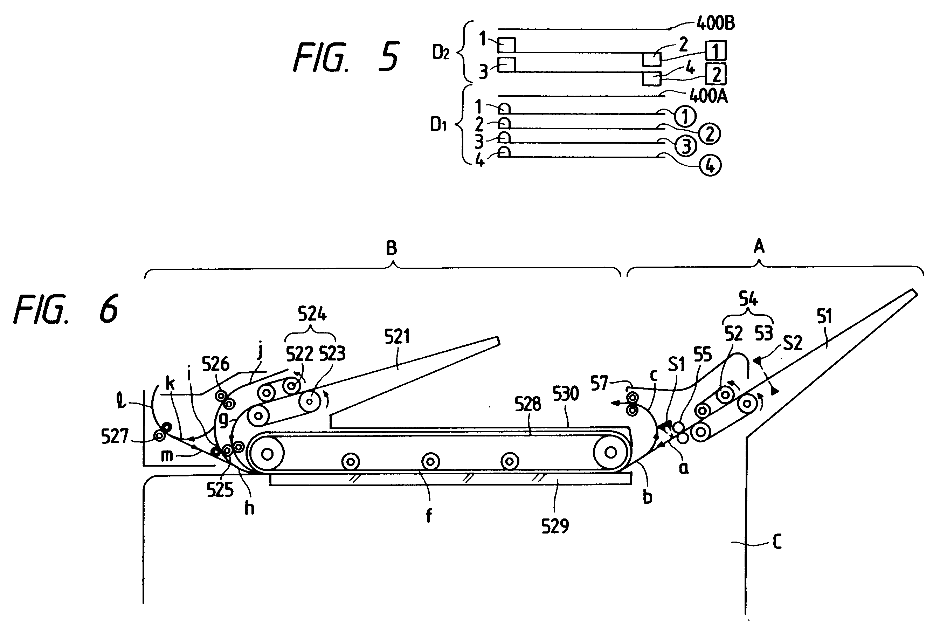

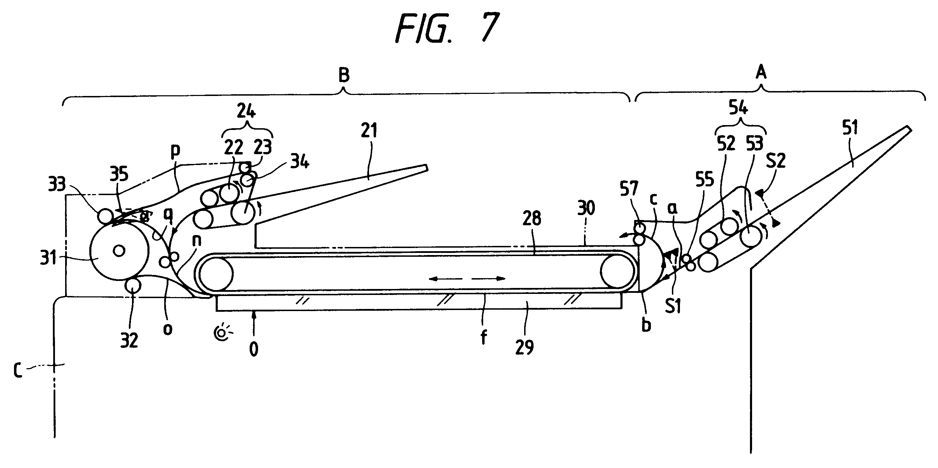

In operation, as shown in Fig. 5, an example that the original group D₁ including first to fourth pages (d) -④ of originals each having image information written on only one surface thereof (referred to as "single surface original" hereinafter) and the original group D₂ including first to fourth pages 1 - 4 of originals each having image information written on both surfaces thereof (referred to as "double surface original" hereinafter) are processed or treated will be explained.

On each original group, a partition paper 400A, 400B (Fig. 5) for setting the mode of the respective original group and for separating the original groups from each other is arranged. In this case, the marking is provided on the upper surface of each partition paper. As shown, the single surface originals are stacked in order in such a manner that the youngest page (d) is positioned uppermost and the oldest page ④ is positioned lowermost and that the surface on which the image information is written faces upside; the double surface originals are stacked in order in such a manner that the youngest page 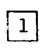 is positioned uppermost. Further, the partition papers 400A and 400B for setting the processing modes of the original groups D₁ and D₂, respectively are positioned on the respective original groups D_{1'} D₂, respectively, with the markings thereof facing upside. These stacks of original groups are further stacked upon each other and disposed on the tray 1 of the A portion (Incidentally, in the illustrated embodiment, while the setting of the processing mode of each original group and the separation between the adjacent original groups are effected by the partition papers, the separation between the adjacent original groups may be effected by partition levers arranged in the vicinity of the tray 1 and the setting of the mode may be effected by inputting the mode information from a control panel of the image forming system).

### (A) The processing of the single surface original group D1:

(A-1) The original group is set, and a start button (not shown) provided in the image forming system C is depressed.
(A-2) The lowermost original ④ is separated from the original group by means of the separating/supplying portion 4.
(A-3) The original ④ is passed through the sheet paths (a), (b), (d), (e), (f), (h), (i) and (j) in order and is received in the tray 21 with the image surface faced upside.
(A-4) Similarly, the originals ③ , ②, are successively separated from the original group and are received in the tray 21.
(A-5) The partition paper 400A is removed, and is moved in the sheet path (a).
(A-6) The partition paper is detected and at the same time the marking thereof is read by the sensor S1 arranged in the sheet path (a), thus determining the processing mode of the original group D₁.
(A-7) The partition paper 400A is passed through the sheet paths (a), (b), (d), (e), and then passed through the switch back mechanism and lastly passed through the sheet path (c) in order, and, accordingly, the partition paper is not ejected on the ejector tray of the B portion.
(A-8) The processing of the originals in the tray 21 is started in accordance with the processing mode determined by the partition paper 400A.
(A-9) The lowermost original ④ is separated from other originals by means of the separating/supplying portion 24.
(A-10) The original ④ is passed through the sheet paths (g), (f) and then passed through the reading portion and then passed through the sheet paths (h), (i), (j) to return to the tray 21.
(A-11) Similarly, the originals ①, ②, ① are brought into the above process (A-10) successively, and are returned to the tray 21.
(A-12) The above processes (A-10), (A-11) are repeated by predetermined times for each of the originals ④, ③, ②, ① in accordance with the processing mode.
(A-13) The originals ④, ③, ②, ① are fed from the tray 21 successively and are passed through the sheet paths (g), (f), (e), (c) in order and are ejected into the ejector tray 30 with the image surface faced upside. In this way, the originals are stacked into the tray 30 in the same order as in the tray 1. In this way, the processing of the original group D₁ has been completed (In the illustrated embodiment, while an example that the originals are ejected onto the tray after the predetermined numbers of the circulation of the originals have been completed was explained, each original may be returned to the tray 30 without returning to the tray 21 in the last circulating cycle. That is to say, only in the last circulating cycle, each original may be fed from the tray 21 and passed through the sheet paths (g), (f) and then passed through the reading portion and then passed through the sheet paths (e), (c) to reach the tray 30).

### (B) The processing of the double surface originals group D₂:

(B-1) After the original group D₁ has been ejected onto the tray 30, the double surface originals ② are sent to the tray 21 successively in accordance with the above-mentioned processes (A-2), (A-3), (A-4).
(B-2) The marking of the partition paper 400B is read in accordance with the above-mentioned processes (A-5), (A-6), thus determining the processing mode of the original group D₂.
(B-3) The partition paper 400B is ejected onto the original group D₁ in the ejector tray 30 in accordance with the above-mentioned process (A-7).
(B-4) The processing of the original group D₂ is started according to the processing mode thereof determined by the partition paper 400B.
(B-5) The lowermost original ① is separated from the original group, and then is passed through the sheet paths (g), (f), (h), (i), (j), (k), (I), (m), (h), (f) in order, and then is passed through the reading portion for the page, and then is passed through the sheet paths (h), (i), 0), (k), (I), (m), (h), (f) in order, and then is passed through the reading portion for the œ page, and then is passed through the sheet paths (h), (i), (j) to return to the tray 21.
(B-6) Similarly, the original 1 is also passed through the sheet paths (g), (f), (h), (i), (j), (k), (I), (m), (h), (f) in order, and then is passed through the reading portion for the 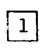 page, and then is passed through the sheet paths (h), (i), (j), (k), (I), (m), (h), (f) in order, and then is passed through the reading portion for the 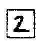 page, and then is passed through the sheet paths (h), (i), (j) to return to the tray 21.
(B-7) The above-mentioned processes (B-5), (B-6) are repeated by the predetermined times in accordance with the processing mode determined by the partition paper 400B.
(B-8) As similar to the above-mentioned process (A-13), the original group D₂ is ejected onto the partition paper 400B for the original group D₂ and stacked in the tray 30 in the same order as in the tray 1 (Also in this case, as mentioned in the above (A-13), in the last circulating cycle, the originals may be ejected into the tray 30 after the reading operation of the respective originals has been completed). In this way, the processing of the original group D₂ is completed.

After the processing of all of the original groups D_{1'} D₂ has been completed, the second sensor S2 detects the fact that there is no original in the tray 1, thus completing the processing operation.

The originals after being processed are received in the ejector tray 30, and since the stacked order of the originals in the tray 30 is the same as the stacked order of the originals when they have been set, the rearranging operation for the pages of the originals can be omitted. Further, since the partition paper exists between the original groups D₁ and D₂, any original group can be easily separated from the other original groups. In addition, as to the copied papers, since they are ejected in the same order as the order of the set originals, a further treatment of the copied sheets can be very convenient.

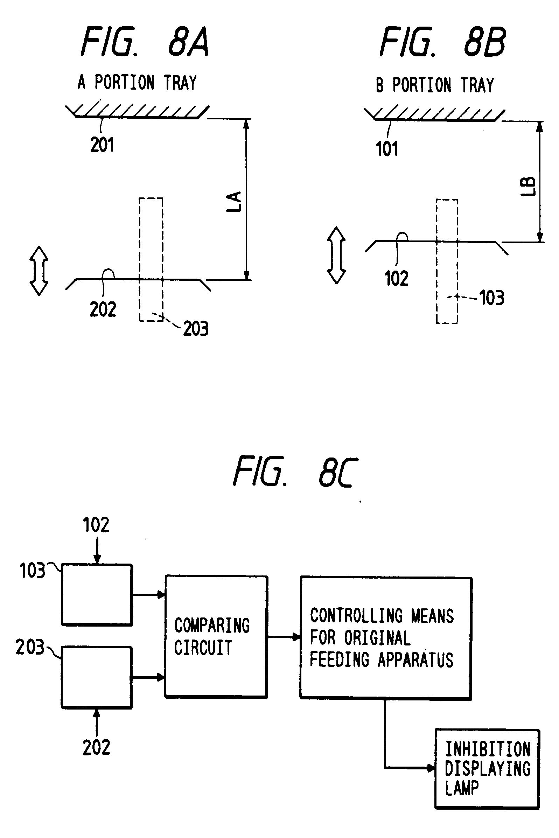

Next, a further embodiment of the present invention will be explained with reference to Fig. 6.

Fig. 6 is an elevational sectional view showing a reserving original feeding apparatus according to a further embodiment of the present invention, which includes an original reserving portion A and an original circulating portion B, as in the embodiment of Fig. 1. Further, the apparatus is adopted to an image forming system C (Incidentally, also in this embodiment, while a turn-over path is constituted by a switch-back path, it may be constituted by appropriate turn-over rollers).

First of all, an original reserving portion A will be explained. This portion A includes an original supply tray (second stack tray) 51 into which an original group is set, and a separating belt means 52 and supply belt means 53 which are arranged downstream of the supply tray and can separate the originals in the tray 51 one by one from the bottom of the original group by rotating in directions shown by the arrows, respectively. The separating belt means 52 and the supply belt means 53 constitute a separating/supplying portion (second separating/supplying means) 54.

Downstream of the separating/supplying portion 54, sheet paths (a), (b) (third sheet path) extend in contiguous to the platen 529 of the processing portion of the image forming system. A pair of rollers 55 are provided for feeding the original in the sheet paths (a), (b). A sheet path (c) (fourth sheet path) is branched from the third sheet path (a) - (b) in a switch-back direction to extend toward an ejector tray 530 on the original circulating portion B. Further, a pair of rollers 57 are provided for feeding the original in the sheet path (c). The junction between the sheet paths is constituted in the same manner as that of Fig. 1, and includes a flexible deflector plate. Further, a second sensor S2 for detecting the original from the tray 51 and a first sensor S1 for detecting the original in the sheet path (a) and for reading a marking on a partition paper are also provided.

Next, the original circulating portion B will be explained (this portion has the same construction as that shown in Fig. 3 and provided number added 500).

This portion B includes an original stack tray (first supply tray) 521 into which a group of originals are set, and a separating belt means 522 and supply belt means 523 which are arranged downstream of the supply tray and can separate the originals in the tray 521 one by one from the bottom of the original group by rotating in directions shown by the arrows, respectively. The separating belt means 522 and the supply belt means 523 constitute a separating/supplying portion (first separating/supplying means) 524.

Downstream of the separating/supplying portion 524, a sheet path (g) (first sheet path) is extended downwardly of the tray 521 to turn-over the original in contiguous to the platen 529 of the processing portion of the system. A white surface belt 528 is arranged in confronting relation to the platen 529, which belt 528 can convey the original on the platen 529. Further, sheet paths (h), (i), (j) (second sheet path) are extended upwardly from the platen 529 to turn over the original toward the tray 521. In addition, pairs of rollers 525, 526 are provided forfeeding the original in the second sheet path (h) - 0), and sheet paths (k), (I), (m) (turn-over path) for turning over the original and a roller pair 527 for conveying the originals in each path are provided.

The junctions between the respective sheet paths are constituted in the same manner as those in the A portion as mentioned above, and an upper surface faced to the platen 529 constitutes an ejector tray 530.

Incidentally, Fig. 7 shows an original circulating portion B as similar to that of Fig. 4.

In operation, an example that the original group D₁ including first to fourth pages ① ④ of originals each having image information written on only one surface thereof (referred to as "single surface original" hereinafter) and the original group D₂ including first to fourth pages 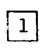 - 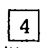 of originals each having image information written on both surfaces thereof (referred to as "double surface original" hereinafter) are processed will be explained.

On each original group, a partition paper 400A, 400B (Fig. 5) for setting the mode of the respective original group and for separating the original groups from each other is arranged. In this case, the marking is provided on the upper surface of each partition paper. As shown, the single surface originals are stacked in order in such a manner that the youngest page (d) is positioned uppermost and the oldest page ④ is positioned lowermost and that the surface on which the image information is written faces upside; whereas, the double surface originals are stacked in order in such a manner that the youngest page 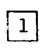 is positioned uppermost. Further, the partition papers 400A and 400B for setting the processing modes of the original groups D₁ and D₂, respectively are positioned on the respective original group D_{1'} D₂, respectively, with the markings thereof facing upside. These stacks of original groups are further stacked on each other and disposed on the tray 51 of the A portion (Incidentally, in the illustrated embodiment, while the setting of the processing mode of each original group and the separation between the adjacent original groups is effected by the partition papers, the separation between the adjacent original groups may be effected by partition levers arranged in the vicinity of the tray 51 and the setting of the mode may be effected by inputting the mode information from a control panel of the image forming system).

### (C) The processing of the single surface original group D₁:

(C-1) The original group is set, and a start button (not shown) provided in the image forming system C is depressed.
(C-2) The lowermost original ④ is separated from the original group by means of the separating/supplying portion 54.
(C-3) The original ④ is passed through the sheet paths (a), (b), (f), (h), (i), 0), (k), (I), (m), (h), (f), (h), (i) and (j) in order and is received in the tray 521 with the image surface facing upside.
(C-4) Similarly, the originals ③ , ②, (1) are successively separated from the original and are received in the tray 521.
(C-5) The partition paper 400A is removed, and is moved in the sheet path (a).
(C-6) The partition paper is detected and at the same time the marking thereof is read by the sensor S1 arranged in the sheet path (a), thus determining the processing mode of the original group D₁.
(C-7) The partition paper 400A is passed through the sheet paths (a), (b), (c) to be ejected in the ejector tray 530 of the B portion. Accordingly, the partition paper is not fed to the B portion.
(C-8) The processing of the originals in the tray 521 is started in accordance with the processing mode determined by the partition paper 400A.
(C-9) The lowermost original ④ is separated from other originals by means of the separating/supplying portion 524.
(C-10) The original ④ is passed through the sheet paths (g), (f) and then passed through the reading portion and then passed through the sheet paths (h), (i), (j) to return to the tray 521.
(C-11) Similarly, the originals ③, ②, ① are brought into the above process (C-10) successively, and are returned to the tray 521.
(C-12) The above processes (C-10), (C-11) are repeated by predetermined times in accordance with the processing mode.
(C-13) The originals ④, ①, ②, ① are fed from the tray 521 successively and are passed through the sheet paths (g), (f), (b), (c) in order and are ejected into the ejector tray 530 with the image surface, facing upside. In this way, the originals are stacked into the tray 530 in the same order as in the tray 51.

In this way, the processing of the original group D₁ has been completed (In the illustrated embodiment, while an example that the originals are ejected onto the tray 530 after the predetermined numbers of the circulation of the originals have been completed was explained, each original may be returned to the tray 530 without returning to the tray 521 in the last circulating cycle. That is to say, only in the last circulating cycle, each original may be fed from the tray 521 and passed through the sheet paths (g), (f) and then passed through the reading portion and then passed through the sheet paths (b), (c) to reach the tray 530).

### (D) The processing of the double surface original group D₂:

(D-1) After the original group D₁ has been ejected onto the tray 530, the double surface originals 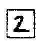 , 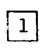 are sent to the tray 521 successively in accordance with the above-mentioned processes (C-2), (C-3), (C-4).
(D-2) The marking of the partition paper 400B is read in accordance with the above-mentioned processes (C-5), (C-6), thus determining the processing mode of the original group D₂.
(D-3) The partition paper 400B is ejected onto the original group D₁ in the ejector tray 530 in accordance with the above-mentioned process (C-7).
(D-4) The processing of the original group D₂ in the tray 521 is started according to the processing mode thereof determined by the partition paper 400B.
(D-5) The lowermost original 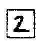 is separated from the original group by means of the separating/supplying portion 524, and then is passed through the sheet paths (g), (f), (h), (i), (j), (k), (I), (m), (h), (f) in order, and then is passed through the reading portion for the 4 page, and then is passed through the sheet paths (h), (i), (j), (k), (I), (m), (h), (f) in order, and then is passed through the reading portion for the 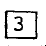 page, and then is passed through the sheet paths (h), (i), (j) to return to the tray 521.
(D-6) Similarly, the original 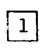 is also passed through the sheet paths (g), (f), (h), (i), (j), (k), (I), (m), (h), (f) in order, and then is passed through the reading portion for the a page, and then is passed through the sheet paths (h), (i), (j), (k), (I), (m), (h), (f) in order, and then is passed through the reading portion for the 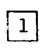 page, and then is passed through the sheet paths (h), (i), (j) to return to the tray 521.
(D-7) The above-mentioned processes (D-5), (D-6) are repeated by the predetermined times in accordance with the processing mode determined by the partition paper 400B.
(D-8) As similar to the above-mentioned process (C-13), the original group D₂ is ejected onto the partition paper 400B for the original group D₂ and stacked in the tray 530 in the same order as in the tray 51 (Also in this case, as mentioned in the above (C-13), in the last circulating cycle, the originals may be ejected into the tray 530 after the reading operation of the respective originals has been completed). In this way, the processing of the original group D₂ is completed.

After the processing of all of the original groups D_{1'} D₂ has been completed, the second sensor S2 detects the fact that there is no original in the tray 51, thus completing the processing operation.

The originals after being processed are received in the ejector tray 530, and since the stacked order of the originals in the tray 530 is the same as the stacked order of the originals when they have been set, the rearranging operation for the pages of the originals can be omitted. Further, since the partition paper exists between the original groups D₁ and D₂, any original group can be easily separated from the other original groups. In addition, as to the copied papers, since they are ejected in the same order as the order of the set originals, a further treatment of the copied sheets can be very convenient.

In the illustrated embodiments, while the sheet path (c) for acting as the ejector path (Figs. 3 and 6) was included in the original reserving portion A, it may be included in the original circulating portion B.

As mentioned above, a change of size of the original causes a problem when the original is fed from the A portion to the B portion.

In general, the original tray is provided with lateral regulating members for defining side edges of the original feeding path, thereby restraining the lateral or transverse movement of the original at the minimum. For example, if the originals having B5 size are fed and processed in the B portion. On the other hand, it is assumed that the originals having A4 size are set in the A portion. In this case, when the original from the A portion is fed to the original tray of the B portion, since the movement of the original is obstructed by the lateral regulating members, jamming of the original will occur. To the contrary, if the originals having A4 size are set in the original tray of the B portion and the originals having B5 size are set in the original tray of the A portion, the movement of the original is not obstructed by the lateral regulating guides, thus preventing the jamming of the original, but there will arise a problem that the lateral regulating guides cannot prevent the lateral movement of the original, thus not ensuring the lateral registering of the original. In this connection, only when the width of the original tray of the A portion is the same as that of the original tray of the B portion, the feeding of the original from the A portion to the B portion is permitted.

Such relation is shown in Fig. 8. As shown in Fig. 8A, a movable guide 202 is mounted for movement toward and away from a fixed guide 201 of the A portion, and a position detecting member 203 is fixedly attached to the movable guide 202. The position detecting member 203 detects a width LA between the guides. As shown in Fig. 8B, similarly, the B portion has a movable guide 102 mounted for movement toward and away from a fixed guide 101, and a position detecting member 103 fixedly attached to the movable guide 102 and serving to detect a width LB between the guides. By comparing the width LAwith the width LB, it is possible to judge whether the feeding of the original is permitted or inhibited (Comprising Circuit and Controlling Circuit in Fig. 8C).

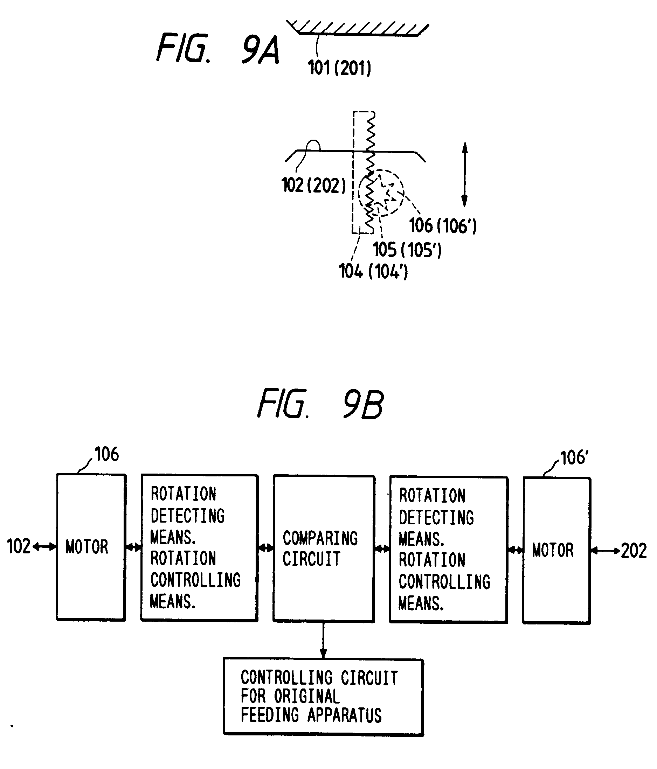

Alternatively, by designing that not only the movable guide 102 can be shifted manually, but also, as shown in Fig. 9, the movable guide 102 can be driven in the lateral direction by means of a rack 104 fixedly attached to the movable guide and meshed with a pinion gear 105 fixed to a motor shaft of a motor (synchronous motor) 106, it is possible to control the tray width LB of the B portion to have the same value as that of the tray width LA of the A portion wherever the movable guide 102 defining the tray width LB be situated. Alternatively, it may be so designed that the motor 106 is rotated when the movable guide 102 is manually adjusted and the rotation of the motor 106 is transmitted to a motor 106' for the guide 202 by the same amount.

Detail of this is explained with reference to Fig. 9B. For example, if the guide is shifted the motor 106 rotates to be detected by rotation detecting means. Consequently, the motor 106' is rotated by rotation controlling means through the comparing circuit and is stopped at the time when the guides 102 and 202 are shifted by the same amount. The controlling circuit for original supplying apparatus having received the signal showing that the guides 102 and 202 are corresponded allows supply of the originals.

With the arrangement mentioned above, since the widths between the guides can be optionally controlled, when the original group is fed from the A portion to the B portion, it may be so designed that the originals are put in order and stacked onto the tray by slightly widening the width between the guides of the tray more than a predetermined value in consideration of the skew-feed and of the lateral movement of the original during a long distant feeding of the original and by applying the jogging to each original. Of course, when the width between the guides of the A portion is equal to that of the B portion, for example, even if the originals having A3 size are set in the A portion and the originals having A4 size are set in the B portion, the original can be fed from the A portion to the B portion without problem. Further, it is no need for regulating the lateral dimension of the portion 30 (Fig. 3) defining the ejector tray, which can freely receive the originals regardless of the size of the originals set in the original trays of the A and B portions.

Next, the ejecting fashion when the original groups are set in the A and B portions will be explained.

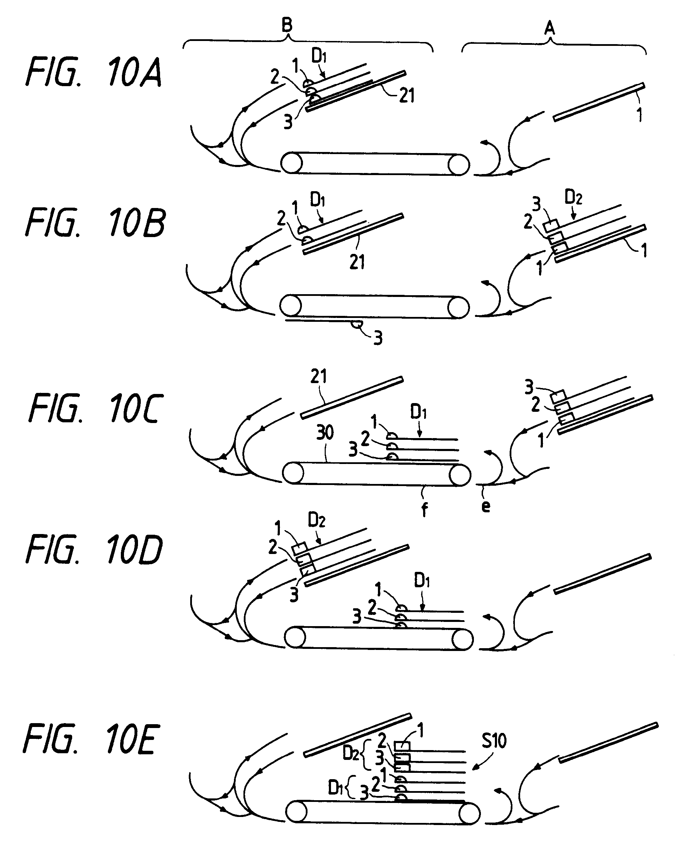

Now, it is assumed thatthe original group D₂ is set in the A portion (Fig. 10B) while the original group D₁ set in the B portion and having the different size is being processed (Fig. 10A). In this case, in the last original circulating cycle, the processed originals are ejected onto the ejector tray 30 and the tray 21 is cleared to receive the originals from the A portion (Fig. 10C).

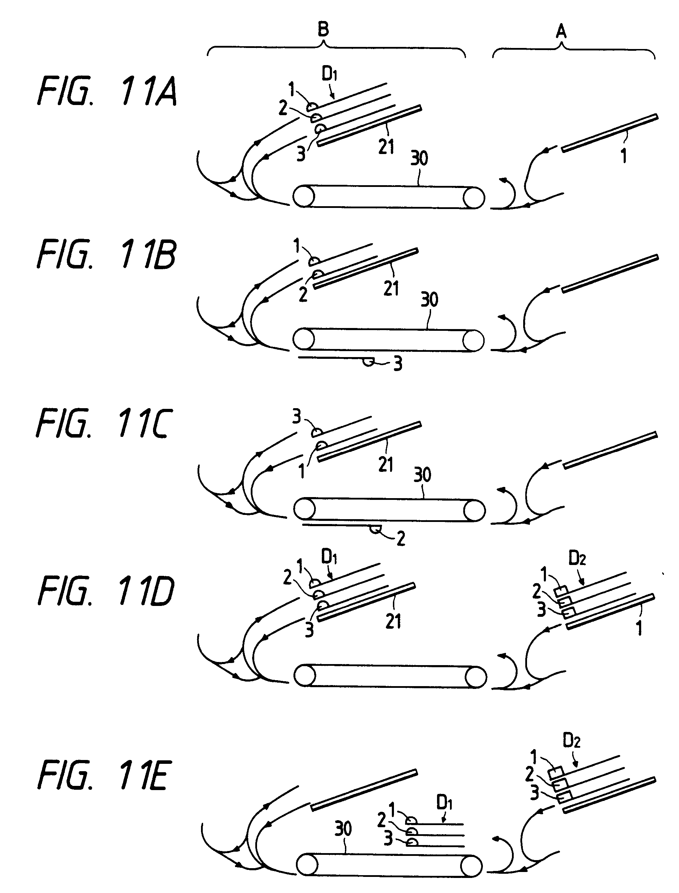

If the originals are not set in the A portion while the originals are processed in the B portion, it is no need for ejecting the processed originals onto the tray 30 in the last original circulating cycle, and the processed originals may be ejected onto the tray 21 (Figs. 11A, 11B and 11C).

If the originals are set in the A portion in the condition that the processing of the originals in the B portion has been completed (Fig. 11 D), as mentioned above, the processed originals may be ejected onto the tray 30 to clear the original from the B portion (Fig. 11 E).

In Fig. 10D, after the originals have been fed from the A portion to the tray of the B portion and such originals have been processed, such originals may be ejected onto the tray of the B portion or onto the tray 30. In this case in order to distinguish the original group from the former original group, it may be so designed that each original group is offset ejected to permit the discrimination of the respective original group.

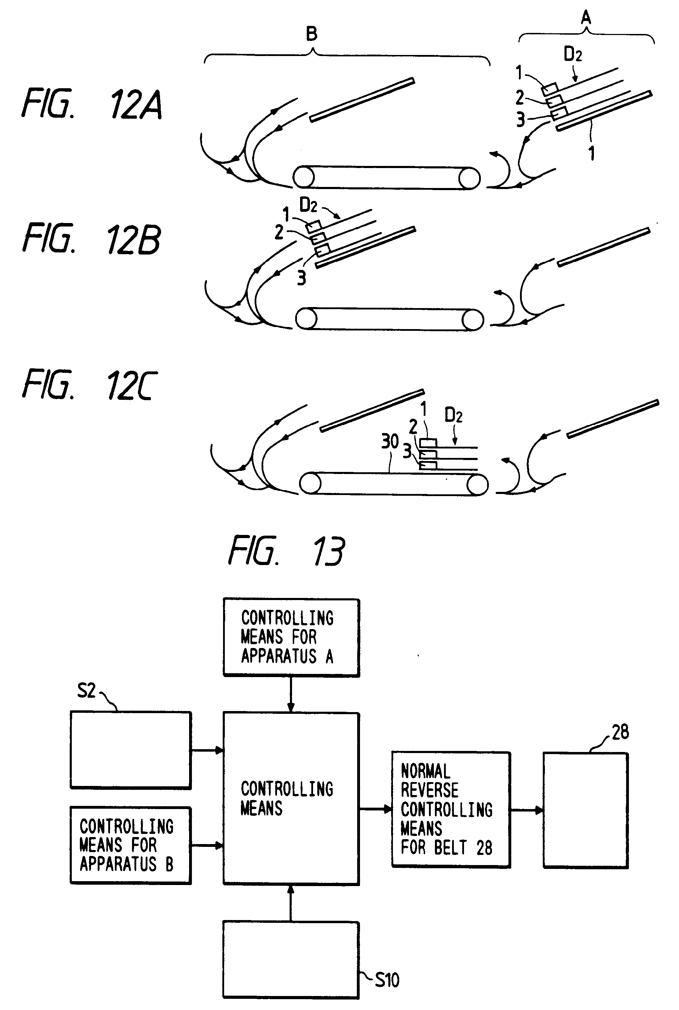

In Fig. 12A, after the originals set in the tray of the A portion have been fed to the tray of the B portion and such originals have been processed, such originals may be returned to the tray of the B portion or may be ejected onto the tray 30, as shown in Fig. 12C. Further, as shown in Fig. 10E, it is feared that when the tray 30 is filled with the ejected originals the entrance is blocked by the ejected originals, thus causing the jamming of the original in the ejector portion. To avoid this, a means S₁₀ for detecting the height of the ejected originals may be provided to permit the judgement whether the feeding of the original from the tray of the B portion is permitted or inhibited on the basis of a signal from such detecting means. Alternatively, a counter means for counting the number of the ejected originals may be provided so that the feeding of the original is stopped when the counted value exceeds a predetermined value.

Incidentally, if the compactness of the apparatus is not requested, while the ejector tray 30 is constituted by the upper surface of the B portion in the illustrated embodiment, an ejector tray may be arranged in a position as shown in Fig. 1 or 2 (position where the ejector tray 230 or 330 is arranged).

## Claims

1. A reserving type original feeding apparatus comprising
a circulating original feeding portion (B) having
(a) a first stack tray (21) on which originals are supported, said first stack tray being arranged to receive manually-set originals,
(b) first separating/supplying means (24) for separating and supplying the originals supported in said first stack tray (21) one by one,
(c) a processing portion (29),
(d) a first sheet path (g, c) for introducing the original supplied by said first separating/supplying means (24) to said processing portion (29) and for ejecting the original processed by said processing portion from said processing portion (29), and
a reserving original feeding portion (A) having
(e) a second stack tray (1) on which originals are supported, said second stack tray being adapted to receive manually-set originals,
(f) second separating/supplying means (4) for separating and supplying the originals supported in said second stack tray (1) one by one,
characterized by
a second sheet path (d, j) for conveying the original supplied by said second separating/supplying means (4) to said circulating original feeding portion (B), and
control means for controlling said apparatus so that an original set on said circulating original feeding portion (B) is first supplied to said processing portion (29) for reading and then an original set on said reserving original feeding portion (A) is automatically supplied through said circulating original feeding portion (B) to said processing portion (29) for reading when the original on said first stack tray (21) is exhausted.

2. A reserving type original feeding apparatus according to claim 1, wherein said processing portion (29) is interposed between said circulating original feeding portion (B) and said reserving original feeding portion (A)

3. A reserving type original feeding apparatus according to claim 2, wherein said processing portion (29) comprises a reading portion having a platen glass.

4. A reserving type original feeding apparatus according to claim 3, wherein an ejection portion of said first sheet path (c) is curved upwardly to turn over the original ejected from said reading portion.

5. A reserving type original feeding apparatus according to claim 4, wherein said ejection portion of said first sheet path (c) is arranged at an end of said platen glass (29) near said reserving original feeding portion (A).

6. A reserving type original feeding apparatus according to claim 5, wherein said ejection portion of said first sheet path (c) is branched from said second sheet path (d, j) in a switch back direction.

7. A reserving type original feeding apparatus according to claim 1, wherein an ejector tray (30) for receiving ejected originals is provided substantially above said processing portion (29).

8. A reserving type original feeding apparatus according to claim 1, wherein, when any reserved original group does not exist on said second stack tray (1), a first original group on said first stack tray (21) is ejected onto said first stack tray (21) or onto an ejector tray (30) after said first original group has been processed, and, when a second reserved original group exists on said second stack tray (1), said first original group on said first stack tray (21) is ejected onto said ejector tray (30) after said first original group has been processed.

9. A reserving type original feeding apparatus according to claim 8, wherein after said first original group has been ejected onto said ejector tray (30) said second original group is fed to said circulating original feeding portion (B) and, thereafter, said second original group is ejected onto said first stack tray (21) after said second original group has been processed.

10. A reserving type original feeding apparatus according to claim 8, wherein after said first original group has been ejected onto said ejector tray (30) said second original group is fed to said circulating original feeding portion (B) and, thereafter, said second original group is ejected onto said first stack tray (21) or onto said ejector tray (30) after said second original group has been processed.

11. A reserving type original feeding apparatus according to claim 8, wherein said ejector tray (30) includes a means (S10) for detecting the fact that said ejector tray (30) is filled with originals.

12. A reserving type original feeding apparatus according to claim 1, further comprising
a first regulating guide (101, 102) for regulating the lateral movement of the original on said first stack tray (21) in a direction transverse to an original feeding direction,
a first position detection means (103) for detecting a position of said first regulating guide,
a second regulating guide (201, 202) for regulating the lateral movement of the original on said second stack tray (1) in a direction transverse to an original feeding direction, and
a second position detection means (203) for detecting a position of said second regulation guide,
wherein a width LB of said first regulating guide (101, 102) detected by said first position detecting means (103) is compared with a width LA of said second regulating guide (201,202) detected by said second position detecting means (203), and, when said widths are equal to each other, the feeding of the original from said reserving original feeding portion (A) to said circulating original feeding portion (B) is permitted.

13. A reserving type original feeding apparatus according to claim 12, wherein said first regulating guide (101, 102) and said second regulating guide (201, 202) are driven by a driving means (104,105,106,104', 105', 106') to have the same lateral width.

14. A reserving type original feeding apparatus according to claim 13, wherein said driving means comprises a motor (106,106') for shifting each of said first (102) and second (202) regulating guides.

15. A reserving type original feeding apparatus according to claim 13, wherein said first regulating guide (101, 102) and said second regulating guide (201, 202) are positioned by controlling said driving means (104, 105, 106, 104', 105', 106').

16. A reserving type original feeding apparatus according to claim 13, wherein an amount of movement of one of said regulating guides (102, 202) is transmitted to the other regulating guide (102, 202) through said motor (106, 106').

17. An image forming apparatus comprising
said reserving type original feeding apparatus of claim 1,
an image forming portion (48, 49, 50, 51) for forming an image corresponding to an image recorded on the original, and
a feeding means (45, 46, 47) for feeding a sheet material to said image forming portion.

## Patentansprüche

1. Eine Vorlagenzufuhrvorrichtung von vorrathaltender Bauart, die umfaßt:
- eine Vorlagenzufuhr-Umlaufsektion (B)
(a) mit einer ersten Stapelschale (21), auf welcher Vorlagen gelagert sind, wobei die genannte erste Stapelschale für einen Empfang von manuell eingebrachten Vorlagen eingerichtet ist,
(b) mit einer ersten Trenn-/Zufuhreinrichtung (24), um die aufdergenannten ersten Stapelschale (21) gelagerten Vorlagen einzeln abzusondern sowie zuzuführen,
(c) mit einer Bearbeitungssektion (29),
(d) mit einer ersten Blattbahn (g, c), um die durch die besagte erste Trenn-/Zufuhreinrichtung (24) zugeführte Vorlage in die erwähnte Bearbeitungssektion (29) einzubringen sowie die durch die erwähnte Bearbeitungssektion bearbeitete Vorlage aus der erwähnten Bearbeitungssektion (29) auszuwerfen, und
- einevorrathaltendevorlagenzufuhrsektion (A)
(e) mit einer zweiten Stapelschale (1), auf der Vorlagen gelagert sind, wobei die genannte zweite Stapelschale zum Empfang von manuell eingebrachten Vorlagen eingerichtet ist,
(f) mit einer zweiten Trenn-/Zufuhreinrichtung (4), um die auf der genannten zweiten Stapelschale (1) gelagerten Vorlagen einzeln abzusondern und zuzuführen,
gekennzeichnet durch
- eine zweite Blattbahn (d, j) zum Transport der durch die besagte zweite Trenn-/Zufuhreinrichtung (4) zugeführten Vorlage zu der erwähnten Vorlagenzufuhr-Umlaufsektion (B) und
- eine Steuereinrichtung, um die besagte Vorrichtung so zu steuern, daß eine auf die erwähnte Vorlagenzufuhr-Umlaufsektion (B) aufgebrachte Vorlage zuerst der genannten Bearbeitungssektion (29) für ein Abtasten zugeführt wird und dann eine auf die besagte vorrathaltende Vorlagenzufuhrsektion (A) aufgebrachte Vorlage automatisch durch die erwähnte Vorlagenzufuhr-Umlaufsektion (B) hindurch zu der genannten Bearbeitungssektion (29) zum Abtasten geführt wird, sobald die Vorlage auf der genannten ersten Stapelschale (21) aufgebraucht ist.

2. Eine Vorlagenzufuhrvorrichtung von vorrathaltender Bauart nach Anspruch 1, in welcher die genannte Bearbeitungssektion (29) zwischen die erwähnte Vorlagenzufuhr-Umlaufsektion (B) und die besagte vorrathaltende Vorlagenzufuhrsektion (A) eingefügt ist.

3. Eine Vorlagenzufuhrvorrichtung von vorrathaltender Bauart nach Anspruch 2, in welcher die genannte Bearbeitungssektion (29) ein Abtastteil mit einer Glasplatte umfaßt.

4. Eine Vorlagenzufuhrvorrichtung von vorrathaltender Bauart nach Anspruch 3, in welcher ein Auswerfabschnitt der erwähnten ersten Blattbahn (c) aufwärts gekrümmt ist, um die von dem besagten Abtastteil ausgeworfene Vorlage umzudrehen.

5. Eine Vorlagenzufuhrvorrichtung von vorrathaltender Bauart nach Anspruch 4, in welcher der erwähnte Auswerfabschnitt der erwähnten ersten Blattbahn (c) an einem Ende der genannten Glasplatte (29) nahe der besagten vorrathaltenden Vorlagenzufuhrsektion (A) angeordnet ist.

6. Eine Vorlgenzufuhrvorrichtung von vorrathaltender Bauart nach Anspruch 5, in welcher der erwähnte Auswerfabschnitt der erwähnten ersten Blattbahn (c) von der genannten zweiten Blattbahn (d, j) in einer Gegenrichtung abgezweigt ist.

7. Eine Vorlagenzufuhrvorrichtung von vorrathaltender Bauart nach Anspruch 1, in welcher eine Auswerfschale (30) zur Aufnahme von ausgeworfenen Vorlagen im wesentlichen über der genannten Bearbeitungssektion (29) vorgesehen ist.

8. Eine Vorlagenzufuhrvorrichtung von vorrathaltender Bauart nach Anspruch 1, in welcher, sobald irgendein bevorrateter Vorlagensatz nicht auf der genannten zweiten Stapelschale (1) vorhanden ist, ein erster Vorlagensatz auf der genannten ersten Stapelschale (21) auf die genannte erste Stapelschale (21) oder auf eine Auswerfschale (30), nachdem der genannte erste Vorlagensatz bearbeitet worden ist, ausgeworfen wird und, sobald ein zweiter bevorrateter Vorlagensatz auf der genannten zweiten Stapelschale (1) vorhanden ist, der genannte erste Vorlagensatz auf der genannten ersten Stapelschale (21) auf die besagte Auswerfschale (30), nachdem der genannte erste Vorlagensatz bearbeitet worden ist, ausgeworfen wird.

9. Eine Vorlagenzufuhrvorrichtung von vorrathaltender Bauart nach Anspruch 8, in welcher, nachdem der genannte erste Vorlagensatz auf die besagte Auswerfschale (30) ausgeworfen worden ist, der erwähnte zweite Vorlagensatz der erwähnten Vorlagenzufuhr-Umlaufsektion (B) zugeführt und danach der erwähnte zweite Vorlagensatz, nachdem der erwähnte zweite Vorlagensatz bearbeitet worden ist, auf die genannte erste Stapelschale (21) ausgeworfen wird.

10. Eine Vorlagenzufuhrvorrichtung von vorrathaltender Bauart nach Anspruch 8, in welcher, nachdem der genannte erste Vorlagensatz auf die besagte Auswerfschale (30) ausgeworfen worden ist, der erwähnte zweite Vorlagensatz zu der erwähnten Vorlagenzufuhr-Umlaufsektion (B) gefördert wird und danach der erwähnte zweite Vorlagensatz auf die genannte erste Stapelschale (21) oder auf die besagte Auswerfschale (30), nachdem der erwähnte zweite Vorlagensatz bearbeitet worden ist, ausgeworfen wird.

11. Eine Vorlagenzufuhrvorrichtung von vorrathaltender Bauart nach Anspruch 8, in welcher die besagte Auswerfschale (30) eine Einrichtung (S10) enthält, um die Tatsache festzustellen, daß die besagte Auswerfschale (30) mit Vorlagen gefüllt ist.

12. Eine Vorlagenzufuhrvorrichtung von vorrathaltender Bauart nach Anspruch 1, die ferner umfaßt:
- eine erste Regulierführung (101, 102), um die Querbewegung der Vorlage auf der genannten ersten Stapelschale (21) in einer Richtung quer zu einer Vorlagentransportrichtung zu regulieren,
- ein erstes Positionermittlungselement (103), um eine Position der genannten ersten Regulierführung zu ermitteln,
- eine zweite Regulierführung (201,202), um die Querbewegung der Vorlage auf der genannten zweiten Stapelschale (1) in einer Richtung quer zu einer Vorlagentransportrichtung zu regulieren, und
- ein zweites Positionermittlungselement (203), um eine Position der zweiten Regulierführung zu ermitteln,
- wobei eine durch das erwähnte erste Positionermittlungselement (103) ermittelte Breite LB der genannten ersten Regulierführung (101, 102) mit einer von dem erwähnten zweiten Positionermittlungselement (203) ermittelten Breite LA der genannten zweiten Regulierführung (201, 202) verglichen wird und, sobald die genannten Breiten einander gleich sind, die Zufuhr der Vorlage von der vorrathaltenden Vorlagenzufuhrsektion (A) zu der erwähnten Vorlagenzufuhr-Umlaufsektion (B) zugelassen wird.

13. Eine Vorlagenzufuhrvorrichtung von vorrathaltender Bauart nach Anspruch 12, in welcher die genannte erste Regulierführung (101, 102) und die genannte zweite Regulierführung (201, 202) durch eine Antriebseinrichtung (104, 105, 106, 104', 105', 106') angetrieben werden, um dieselbe Querbreite zu erhalten.

14. Eine Vorlagenzufuhrvorrichtung von vorrathaltender Bauart nach Anspruch 13, in welcher die besagte Antriebseinrichtung einen Motor (106, 106') enthält, um jede der genannten ersten (102) und zweiten (202) Regulierführungen zu verschieben.

15. Eine Vorlagenzufuhrvorrichtung von vorrathaltender Bauart nach Anspruch 13, in welcher die genannte erste Regulierführung (101, 102) und die genannte zweite Regulierführung (201, 202) durch Steuerung der besagten Antriebseinrichtung (104, 105, 106, 104', 105', 106') reguliert werden.

16. Eine Vorlagenzufuhrvorrichtung von vorrathaltender Bauart nach Anspruch 13, in welcher ein Bewegungswert von einer der genannten Regulierführungen (102,202) durch den besagten Motor (106, 106') auf die andere Regulierführung (102, 202) übertragen wird.

17. Ein Bilderzeugungsgerät, das umfaßt:
- die besagte Vorlagenzufuhrvorrichtung von vorrathaltender Bauart nach Patentanspruch 1,
- eine Bilderzeugungssektion (48, 49, 50, 51) zur Erzeugung einer Abbildung, die einem an der Vorlage aufgezeichneten Bild entspricht, und
- eine Zufuhreinrichtung (45, 46, 47) zur Zufuhr eines Blattmaterials zu der erwähnten Bilderzeugungssektion.

## Revendications

1. Un appareil d'alimentation en originaux du type à stockage temporaire comprenant
une partie d'alimentation en originaux ayant une fonction de transport (B), comportant
(a) un premier plateau de support de pile (21) qui supporte des originaux, ce premier plateau de support de pile étant conçu pour recevoir des originaux placés manuellement,
(b) des premiers moyens de séparation/four- niture (24) destinés à séparer et à fournir un par un les originaux qui sont supportés sur le premier plateau de support de pile (21),
(c) une partie de traitement (29),
(d) un premier chemin de feuilles (g, c) pour introduire dans la partie de traitement (29) l'original qui est fourni par les premiers moyens de séparation/ fourniture (24), et pour éjecter de la partie de traitement (29) l'original qui a été traité par cette partie de traitement, et
une partie d'alimentation en originaux ayant une fonction de stockage temporaire (A), comportant
(e) un second plateau de support de pile (1) qui supporte des originaux, ce second plateau de support de pile étant conçu pour recevoir des originaux placés manuellement,
(f) des seconds moyens de séparation/fourni- ture (4) qui sont destinés à séparer et à fournir un par un les originaux qui sont supportés sur le second plateau de support de pile (1),
caractérisé par
un second chemin de feuilles (d, j) pour transporter l'original fourni par les seconds moyens de séparation/ fourniture (4) vers la partie d'alimentation en originaux ayant une fonction de transport (B), et
des moyens de commande pour commander l'appareil de façon qu'un original qui est placé sur la partie d'alimentation en originaux ayant une fonction de transport (B) soit tout d'abord fourni à la partie de traitement (29) pour être lu, après quoi un original placé sur la partie d'alimentation en originaux ayant une fonction de stockage temporaire (A) est automatiquement fourni à la partie de traitement (29) par l'intermédiaire de la partie d'alimentation en originaux ayant une fonction de transport (B), pour être lu au moment où l'original qui se trouve sur le premier plateau de support de pile (21) est évacué.

2. Un appareil d'alimentation en originaux du type à stockage temporaire selon la revendication 1, dans lequel la partie de traitement (29) est intercalée entre la partie d'alimentation en originaux ayant une fonction de transport (B) et la partie d'alimentation en originaux ayant une fonction de stockage temporaire (A).

3. Un appareil d'alimentation en originaux du type à stockage temporaire selon la revendication 2, dans lequel la partie de traitement (29) comprend une partie de lecture ayant un plateau en verre.

4. Un appareil d'alimentation en originaux du type à stockage temporaire selon la revendication 3, dans lequel une partie d'éjection du premier chemin de feuilles (c) est courbée vers le haut pour retourner l'original qui est éjecté de la partie de lecture.

5. Un appareil d'alimentation en originaux du type à stockage temporaire selon la revendication 4, dans lequel la partie d'éjection du premier chemin de feuilles (c) est disposée à une extrémité du plateau en verre (29) au voisinage de la partie d'alimentation en originaux ayant une fonction de stockage temporaire (A).

6. Un appareil d'alimentation en originaux du type à stockage temporaire selon la revendication 5, dans lequel la partie d'éjection du premier chemin de feuilles (c) s'embranche à partir du second chemin de feuilles (d, j) dans une direction retournant en arrière.

7. Un appareil d'alimentation en originaux du type à stockage temporaire selon la revendication 1, dans lequel un plateau d'éjection (30) qui est destiné à recevoir des originaux éjectés est placé pratiquement au-dessus de la partie de traitement (29).

8. Un appareil d'alimentation en originaux du type à stockage temporaire selon la revendication 1, dans lequel, lorsqu'un groupe d'originaux stocké temporairement n'est pas présent sur le second plateau de support de pile (1), un premier groupe d'originaux se trouvant sur le premier plateau de support de pile (21) est éjecté sur le premier plateau de support de pile (21) ou sur un plateau d'éjection (30) après que le premier groupe d'originaux a été traité, et lorsqu'un second groupe d'originaux stocké temporairement est présent sur le second plateau de support de pile (1), le premier groupe d'originaux sur le premier plateau de support de pile (21) est éjecté sur le plateau d'éjection (30) après que ce premier groupe d'originaux a été traité.

9. Un appareil d'alimentation en originaux du type à stockage temporaire selon la revendication 8, dans lequel après que le premier groupe d'originaux a été éjecté sur le plateau d'éjection (30), le second groupe d'originaux est fourni à la partie d'alimentation en originaux ayant une fonction de transport (B), et ensuite le second groupe d'originaux est éjecté sur le premier plateau de support de pile (21) après que ce second groupe d'originaux a été traité.

10. Un appareil d'alimentation en originaux du type à stockage temporaire selon la revendication 8, dans lequel après que le premier groupe d'originaux a été éjecté sur le plateau d'éjection (30), le second groupe d'originaux est fourni à la partie d'alimentation en originaux ayant une fonction de transport (B), et ensuite le second groupe d'originaux est éjecté sur le premier plateau de support de pile (21) ou sur le plateau d'éjection (30) après que ce second groupe d'originaux a été traité.

11. Un appareil d'alimentation en originaux du type à stockage temporaire selon la revendication 8, dans lequel le plateau d'éjection (30) comprend un moyen (S10) pour détecter le fait que le plateau d'éjection (30) est rempli d'originaux.

12. Un appareil d'alimentation en originaux du type à stockage temporaire selon la revendication 1, comprenant en outre
un premier guide de régulation (101, 102) pour réguler le mouvement latéral de l'original sur le premier plateau de support de pile (21) dans une direction transversale à une direction d'avance des originaux,
des premiers moyens de détection de position (103) pour détecter une position du premier guide de régulation,
un second guide de régulation (201, 202) pour réguler le mouvement latéral de l'original sur le second plateau de support de pile (1) dans une direction transversale à une direction d'avance des originaux, et
des seconds moyens de détection de position (203) pour détecter une position sur le second guide de régulation,
et dans lequel une largeur LB du premier guide de régulation (101, 102) qui est détectée par les premiers moyens de détection de position (103) est comparée avec une largeur LA du second guide de régulation (201, 202) qui est détectée par les seconds moyens de détection de position (203), et lorsque ces largeurs sont mutuellement égales, l'avance de l'original de la partie d'alimentation en originaux ayant une fonction de stockage temporaire (A) vers la partie d'alimentation en originaux ayant une fonction de transport (B) est autorisée.

13. Un appareil d'alimentation en originaux du type à stockage temporaire selon la revendication 12, dans lequel le premier guide de régulation (101, 102) et le second guide de régulation (201, 202) sont déplacés par des moyens de déplacement (104, 105, 106, 104', 105', 106') de façon à avoir la même largeur latérale.

14. Un appareil d'alimentation en originaux du type à stockage temporaire selon la revendication 13, dans lequel les moyens de déplacement comprennent un moteur (106, 106') pour dépla- cerchacun des premier (102) et second (202) guides de régulation.

15. Un appareil d'alimentation en originaux du type à stockage temporaire selon la revendication 13, dans lequel le premier guide de régulation (101, 102) et le second guide de régulation (201, 202) sont positionnés par la commande des moyens de déplacement (104,105,106,104', 105', 106').

16. Un appareil d'alimentation en originaux du type à stockage temporaire selon la revendication 13, dans lequel une valeur de mouvement de l'un des guides de régulation (102, 202) est transmise à l'autre guide de régulation (102, 202) par l'intermédiaire du moteur (106, 106').

17. Un appareil de formation d'image comprenant
l'appareil d'alimentation en originaux du type à stockage temporaire de la revendication 1,
une partie de formation d'image (48, 49, 50, 51) pour former une image correspondant à une image qui est enregistrée sur l'original, et
des moyens d'alimentation (45, 46, 47) pour fournir une feuille à la partie de formation d'image.
